(19)

Europäisches Patentamt
European Patent Office
Office européen des brevets

(11) **EP 4 456 646 A1**

(12) **EUROPEAN PATENT APPLICATION**
published in accordance with Art. 153(4) EPC

(43) Date of publication:
**30.10.2024 Bulletin 2024/44**

(21) Application number: **22911939.1**

(22) Date of filing: **21.12.2022**

(51) International Patent Classification (IPC):
*H04W 72/20* (2023.01)     *H04W 72/02* (2009.01)
*H04W 28/26* (2009.01)     *H04W 76/28* (2018.01)
*H04W 4/40* (2018.01)

(52) Cooperative Patent Classification (CPC):
**H04W 4/40; H04W 28/26; H04W 72/02;
H04W 72/20; H04W 76/28**

(86) International application number:
**PCT/KR2022/020983**

(87) International publication number:
**WO 2023/121306 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 KR 20210183273**

(71) Applicant: **LG Electronics Inc.
Yeongdeungpo-gu
Seoul 07336 (KR)**

(72) Inventors:
• **PARK, Giwon**
  **Seoul 06772 (KR)**
• **SEO, Hanbyul**
  **Seoul 06772 (KR)**
• **LEE, Seungmin**
  **Seoul 06772 (KR)**
• **BACK, Seoyoung**
  **Seoul 06772 (KR)**

(74) Representative: **Plasseraud IP
104 Rue de Richelieu
CS92104
75080 Paris Cedex 02 (FR)**

(54) **PERIODIC RESERVATION RESOURCE INFORMATION-BASED SL DRX OPERATION METHOD AND DEVICE IN NR V2X**

(57)     An operation method of a first device (100) in a wireless communication system is presented. The method comprises the steps of: acquiring information related to an SL DRX activation time of a second device (200); and performing resource selection on a plurality of resources for the transmission of a plurality of MAC PDUs, wherein the step of performing the resource selection can comprise the steps of: selecting, within the SL DRX activation time, at least one first resource in a first period; and selecting at least one second resource in a second period on the basis of the at least one first resource and a resource reservation period.

FIG. 10

obtaining information related to
an SL DRX active time of a second device — S1010

performing resource selection for a plurality of
resources for transmissions of multiple MAC PDUs — S1020

**Description**

**TECHNICAL FIELD**

This disclosure relates to a wireless communication system.

**BACKGROUND ART**

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication apparatuses require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

**DISCLOSURE**

**TECHNICAL SOLUTION**

According to an embodiment of the present disclosure, a method for performing, by a first device, wireless communication may be proposed. For example, the method may comprise: obtaining information related to a sidelink, SL, discontinuous reception, DRX, active time of a second device; and performing resource selection for a plurality of resources for transmissions of multiple medium access control, MAC, protocol data units, PDUs, wherein steps of performing the resource selection may include: selecting at least one first resource within a period 1, within the SL DRX active time; and selecting at least one second resource within a period 2, based on the at least one first resource and a resource reservation period, and wherein the period 1 may be the first period related to a resource selection.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain information related to a sidelink, SL, discontinuous reception, DRX, active time of a second device; and perform resource selection for a plurality of resources for transmissions of multiple medium access control, MAC, protocol data units, PDUs, wherein steps of performing the resource selection may include: selecting at least one first resource within a period 1, within the SL DRX active time; and selecting at least one second resource within a period 2, based on the at least one first resource and a resource reservation period, and wherein the period 1 may be the first period related to a resource selection.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: obtain information related to a sidelink, SL, discontinuous reception, DRX, active time of a second UE; and perform resource selection for a plurality of resources for transmissions of multiple medium access control, MAC, protocol data units, PDUs, wherein steps of performing the resource selection may include: selecting at least one first resource within a period 1, within the SL DRX active time; and selecting at least one second resource within a period 2, based on the at least one first resource and a resource reservation period, and wherein the period 1 may be the first period related to a resource selection.

According to an embodiment of the present disclosure, a non-transitory computer-readable storage medium storing instructions may be proposed. For example, the instructions, when executed, may cause a first device to: obtain information related to a sidelink, SL, discontinuous reception, DRX, active time of a second device; and perform resource selection for a plurality of resources for transmissions of multiple medium access control, MAC, protocol data units, PDUs, wherein steps of performing the resource selection may include: selecting at least one first resource within a period 1, within the SL DRX active time; and selecting at least one second resource within a period 2, based on the at least one first resource and a resource reservation period, and wherein the period 1 may be the first period related to a resource selection.

According to an embodiment of the present disclosure, a method for performing, by a second device, wireless communication may be proposed. For example, the method may comprise: obtaining a sidelink, SL, discontinuous reception, DRX, configuration; receiving, from a first device, sidelink control information, SCI, including information for at least one first resource within a period 1 and at least one second resource within a period 2, through a physical sidelink control channel, PSCCH, based on the at least one first resource; and obtaining information for the at least one second resource, based on the at least one first resource and information for a transmission reservation period included in the SCI, wherein the at least one first resource may be selected within an SL DRX active time of the SL DRX configuration, wherein the at least one second resource may be selected based on the at least one first resource and the resource reservation period, and wherein the period 1 may be the first period related to resource selection.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: obtain a sidelink, SL, discontinuous reception, DRX, configuration; receive, from a first device, sidelink control information, SCI, including information for at least one first resource within a period 1 and at least one second resource within a period 2, through a physical sidelink control channel, PSCCH, based on the at least one first resource; and obtain information for the at least one second resource, based on the at least one first resource and information for a transmission reservation period included in the SCI, wherein the at least one first resource may be selected within an SL DRX active time of the SL DRX configuration, wherein the at least one second resource may be selected based on the at least one first resource and the resource reservation period, and wherein the period 1 may be the first period related to resource selection.

## ADVANTAGEOUS EFFECTS

A UE can efficiently perform sidelink communication.

## BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows an embodiment in which a transmission UE schedules periodic transmission resources, according to one embodiment of the present disclosure.
FIG. 9 shows an embodiment in which a transmission UE reserves periodic transmission resources and reselects them, according to one embodiment of the present disclosure.
FIG. 10 shows a procedure for a first device to perform wireless communication, according to one embodiment of the present disclosure.
FIG. 11 shows a procedure for a second device to perform wireless communication, according to one embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques used herein that are not specifically described, reference may be made to wireless communication standards documents published prior to the filing of this specification.

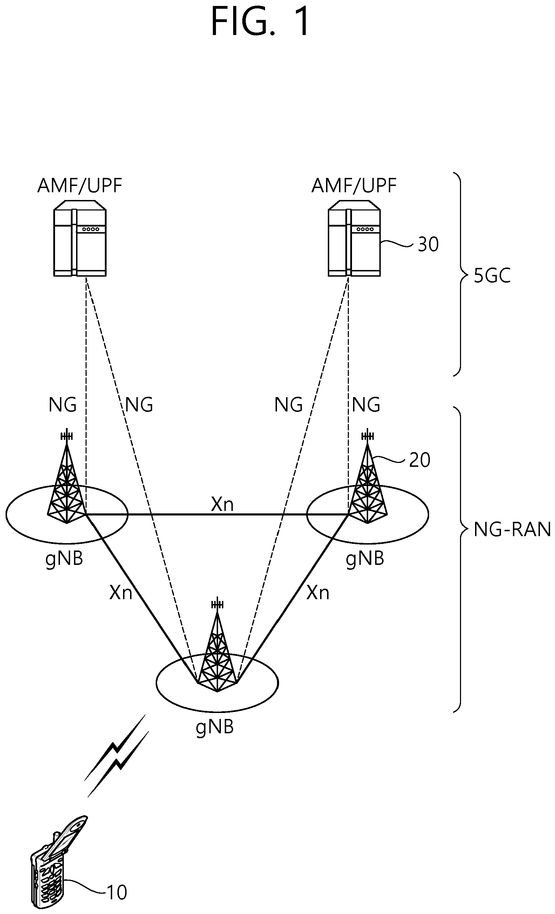

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

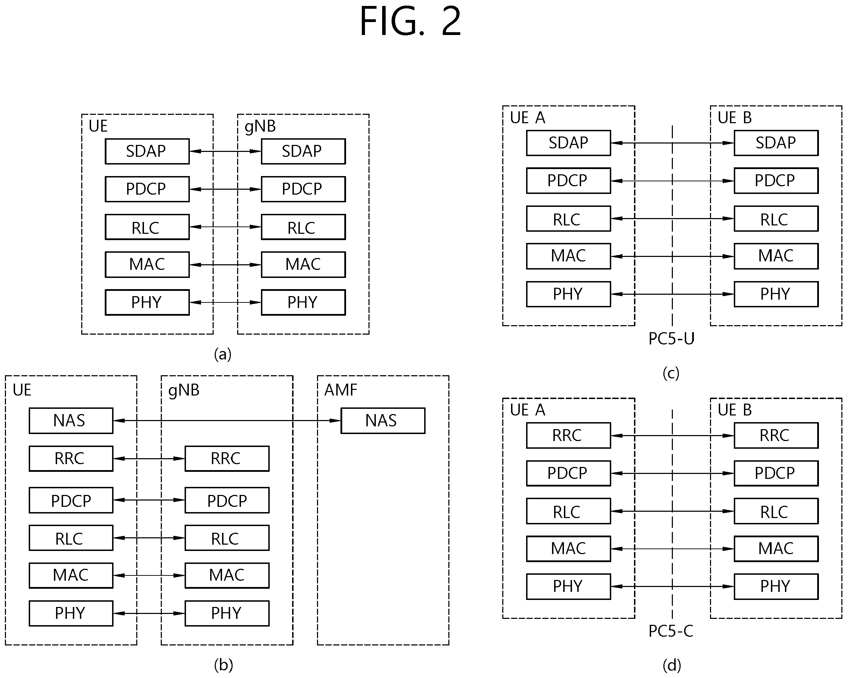

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an higher layer with an information transfer service through a physical channel. The physical layer is connected to a medium access control (MAC) layer which is an higher layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a specific service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

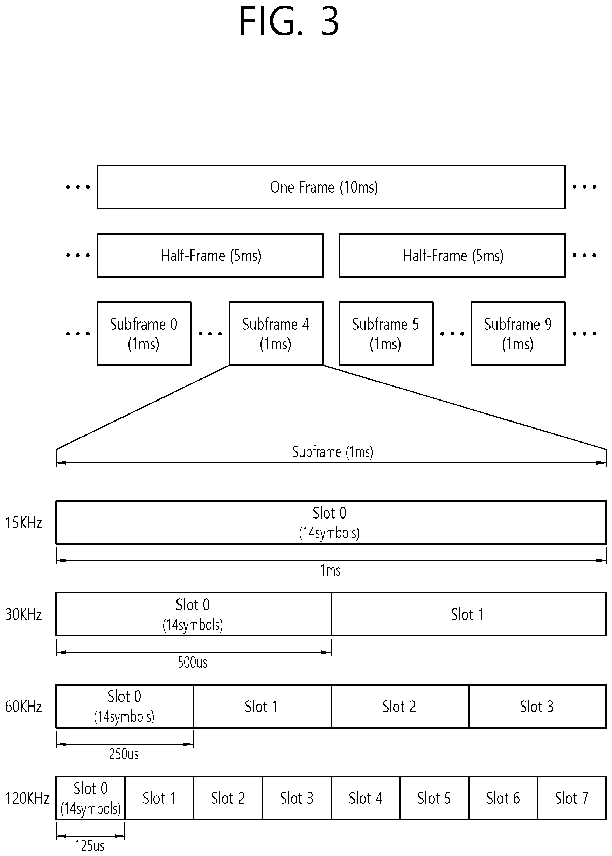

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

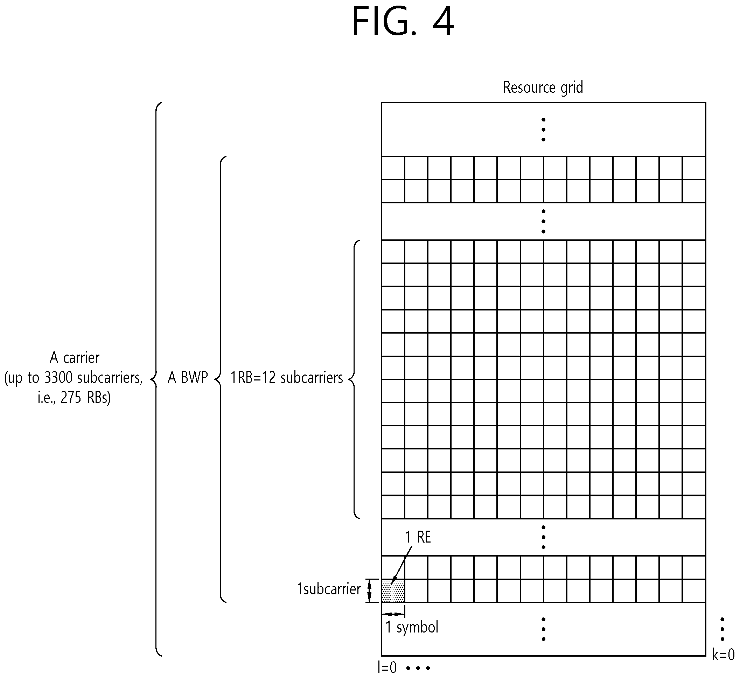

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

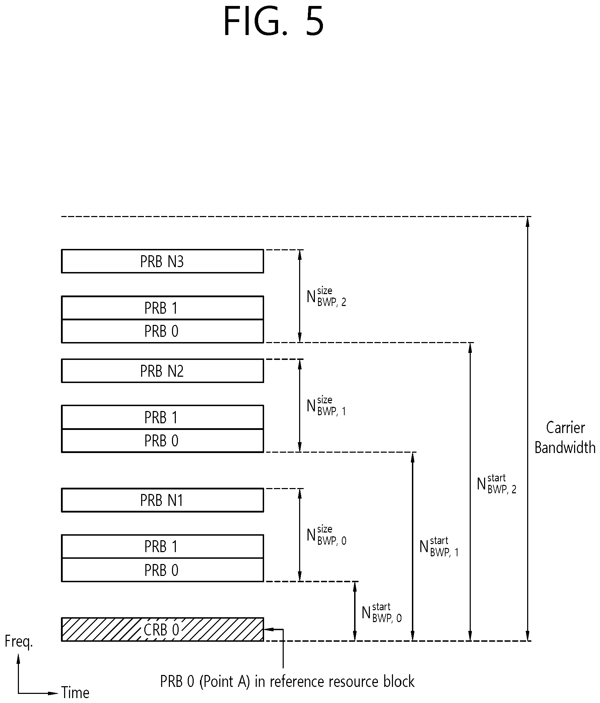

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

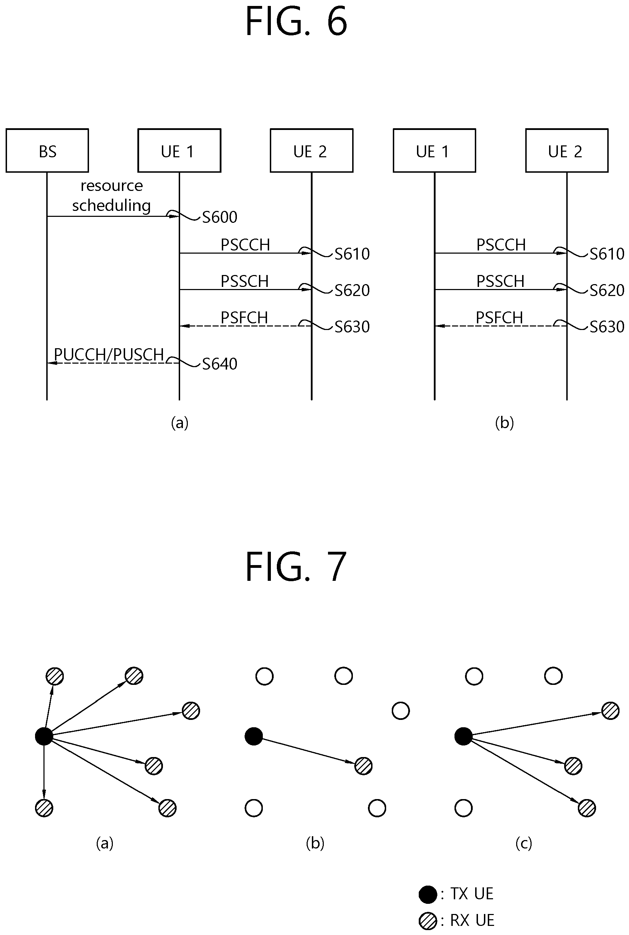

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

Hereinafter, a UE procedure for determining a subset of resources to be reported to an higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set

of resources ($r_0$, $r_1$, $r_2$, ...) which may be subject to re-evaluation and a set of resources $(r'_0, r'_1, r'_2, ...)$ which may be subject to pre-emption.

- it is up to UE implementation to determine the subset of resources as requested by higher layers before or after the slot $r''_i$ - $T_3$, where $r''_i$ is the slot with the smallest slot index among ($r_0$, $r_1$, $r_2$, ... ) and ( $r'_0, r'_1, r'_2, \cdots$ ) and $T_3$ is equal to $T^{SL}_{proc,1}$, where $T^{SL}_{proc,1}$ is defined in slots, and where $\mu_{SL}$ is the SCS configuration of the SL BWP.

The following higher layer parameters affect this procedure:

sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination ($p_i$, $p_j$), where $p_i$ is the value of the priority field in a received SCI format 1-A and $p_j$ is the priority of the transmission of the UE selecting resources; for a given invocation of this procedure, $p_j$ = $prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ may denote the set of slots which belongs to the sidelink resource pool.

For example, a UE may select a set of candidate resources (Sa) based on Table 8. For example, when resource (re)selection is triggered, a UE may select a candidate resource set (Sa) based on Table 8. For example, when re-evaluation or pre-emption is triggered, a UE may select a candidate resource set (Sa) based on Table 8.

[Table 8]

| |
|---|
| The following steps are used:<br><br>1) A candidate single-slot resource for transmission $R_{x,y}$ is defined as a set of $L_{subCH}$ contiguous sub-channels with sub-channel $x+j$ in slot $t'^{SL}_y$ where $j = 0,...,L_{subCH}$ - 1. The UE shall assume that any set of $L_{subCH}$ contiguous sub-channels included in the corresponding resource pool within the time interval [$n + T_1$, $n + T_2$] correspond to one candidate single-slot resource, where<br><br>- selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;<br><br>- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).<br><br>The total number of candidate single-slot resources is denoted by $M_{total}$.<br><br>2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots. |

(continued)

3) The internal parameter $Th(p_i, p_j)$ is set to the corresponding value of RSRP threshold indicated by the i-th field in *sl-Thres-RSRP-List,* where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with *'Resource reservation period* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the *'Resource reservation period* field is present in the received SCI format 1-A, is assumed to be received in slot(s) $t'^{SL}_{m+q \times P'_{rsvp\_RX}}$ determines according to clause 8.1.5 the set of resource blocks and slots which overlaps with $R_{x,y+j \times P'_{rsvp\_TX}}$ for $q=1, 2, ..., Q$ and $j=0, 1, ..., C_{resel} - 1$. Here, $P'_{rsvp\_RX}$ is $P_{rsvp\_\_RX}$ converted to units of logical slots according to clause 8.1.7, $Q = \left\lceil \frac{T_{scal}}{P_{rsvp\_RX}} \right\rceil$ if $P_{rsvp\_RX} < T_{scal}$ and $n' - m \leq P'_{rsvp\_RX}$, where $t'^{SL}_{n'} = n$ if slot $n$ belongs to the set $(t'^{SL}_0, t'^{SL}_1, ..., t'^{SL}_{T'max-1})$, otherwise slot $t'^{SL}_{n'}$ is the first slot after slot $n$ belonging to the set $(t'^{SL}_0, t'^{SL}_1, ..., t'^{SL}_{T'max-1})$; otherwise $Q = 1$. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set $(r_0, r_1, r_2, ... )$ is not a member of $S_A$, then the UE shall report re-evaluation of the resource $r_i$ to higher layers.

If a resource $r'_i$ from the set $(r'_0, r'_1, r'_2, ...)$ meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

- *sl-PreemptionEnable* is provided and is equal to 'enabled' and $prio_{TX} > prio_{RX}$

- *sl-PreemptionEnable* is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing based on Tables 4 and 5.

[Table 9]

In sidelink transmission mode 4, when requested by higher layers in subframe *n* for a carrier, the UE shall determine the set of resources to be reported to higher layers for PSSCH transmission according to the steps d escribed in this Subclause. Parameters $L_{subCH}$ the number of sub-channels to be used for the PSSCH transmission in a subframe, $P_{rsvp\_TX}$ the resource reservation interval, and *prio*$_{TX}$ the priority to be transmitted in the associated SCI format 1 by the UE are all provided by higher layers.

In sidelink transmission mode 3, when requested by higher layers in subframe *n* for a carrier, the UE shall determine the set of resources to be reported to higher layers in sensing measurement according to the steps described in this Subclause. Parameters $L_{subCH}$, $P_{rsvp\_TX}$ and *prio*$_{TX}$ are all provided by higher layers. $C_{resel}$ is determined by $C_{resel}$=10*SL_RESOURCE_RESELECTION_COUNTER, where SL_RESOURCE_RESELECTION_COUNTER is provided by higher layers.

...

If partial sensing is configured by higher layers then the following steps are used:

1) A candidate single-subframe resource for PSSCH transmission $R_{x,y}$ is defined as a set of $L_{subCH}$ contiguous sub-channels with sub-channel x+j in subframe $t_y^{SL}$ where *j* = 0, ... , $L_{subCH}$ - 1. The UE shall determine by its implementation a set of subframes which consists of at least *Y* subframes within the time interval [n + $T_1$,n + $T_2$] where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for *prio*$_{TX}$, otherwise $20 \leq T_2 \leq 100$. UE selection of $T_2$ shall fulfil the latency requirement and *Y* shall be greater than or equal to the high layer parameter *minNumCandidateSF.* The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where $i = (a - 1) * 8 + b$.

4) The set $S_A$ is initialized to the union of all the candidate single-subframe resources. The set $S_B$ is initialized to an empty set.

5) The UE shall exclude any candidate single-subframe resource$R_{x,y}$ from the set $S_A$ if it meets all the following conditions:

- the UE receives an SCI format 1 in subframe $t_m^{SL}$ , and "Resource reservation" field and "Priority" field in the received SCI format 1 indicate the values $P_{rsvp\_RX}$ and *prio*$_{RX}$, respectively.

- PSSCH-RSRP measurement according to the received SCI format 1 is higher than $Th_{prio_{TX},prio_{RX}}$.

- the SCI format received in subframe $t_m^{SL}$ or the same SCI format 1 which is assumed to be received in subframe(s) $t_{m+q \times P_{step} \times P_{rsvp_{RX}}}^{SL}$ determines according to 14.1.1.4C the set of resource blocks and subframes which overlaps with $R_{x,y+j \times P'rsvp\_TX}$ for *q*=1, 2, ..., *Q* and *j*=0, 1, ...,

(continued)

$C_{\text{resel}}$ - 1. Here, $Q = \dfrac{1}{P_{rsvp\_RX}}$ if $P_{\text{rsvp\_RX}}$ and $y'$ - $m \leq P_{step} \times P_{rsvp\_Rx} + P_{step}$, where $t_{y'}^{SL}$ is the last subframe of the $Y$ subframes , and $Q = 1$ otherwise.

6) If the number of candidate single-subframe resources remaining in the set $S_A$ is smaller than $0.2 \cdot M_{total}$, then Step 4 is repeated with $Th_{a,b}$ increased by 3 dB.

[Table 10]

7) For a candidate single-subframe resource $R_{x,y}$ remaining in the set $S_A$, the metric $E_{x,y}$ is defined as the linear average of S-RSSI measured in sub-channels $x+k$ for $k = 0, ..., L_{subCH}$ - 1 in the monitored subframes in Step 2 that can be expressed by $t_{y-P_{step}*j}^{SL}$ for a non-negative integer $j$.

8) The UE moves the candidate single-subframe resource $R_{x,y}$ with the smallest metric $E_{x,y}$ from the set $S_A$ to $S_B$. This step is repeated un til the number of candidate single-subframe resources in the set $S_B$ becomes greater than or equal to $0.2 \cdot M_{total}$.

9) When the UE is configured by upper layers to transmit using resource pools on multiple carri ers, it shall exclude a candidate single-subframe resource $R_{x,y}$ from $S_B$ if the UE does not sup port transmission in the candidate single-subframe resource in the carrier under the assumption t hat transmissions take place in other carrier(s) using the already selected resources due to its limi tation in the number of simultaneous transmission carriers, its limitation in the supported carrier combinations, or interruption for RF retuning time.

The UE shall report set $S_B$ to higher layers.

If transmission based on random selection is configured by upper layers and when the UE is config ured by upper layers to transmit using resource pools on multiple carriers, the following steps are u sed:

1) A candidate single-subframe resource for PSSCH transmission $R_{x,y}$ is defined as a set of $L_{subCH}$ contiguous sub-channels with sub-channel $x+j$ in subframe $t_y^{SL}$ where $j = 0, ..., L_{subCH}$ - 1. The UE shall assume that any set of $L_{subCH}$ contiguous sub-channels inc luded in the corresponding PSSCH resource pool within the time interval $[n + T_1, n + T_2]$ corr esponds to one candidate single-subframe resource, where selections of $T_1$ and $T_2$ are up to U E implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the laten cy requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

FIG. 7 shows three cast types, based on an embodiment of the present disclosure. The embodiment of FIG. 7 may be combined with various embodiments of the present disclosure. Specifically, FIG. 7(a) shows a broadcast type of SL communication, FIG. 7(b) shows a unicast type of SL communication, and FIG. 7(c) shows a groupcast type of SL communication. In the case of unicast type SL communication, a UE may perform one-to-one communication with other UEs. In the case of groupcast type SL communication, a UE may perform SL communication with one or more UEs in a group to which it belongs. In various embodiments of the present disclosure, SL groupcast communication may be replaced by SL multicast communication, SL one-to-many communication, and the like.

In this specification, the wording "configuration or definition" may be interpreted as being configured (in advance) by a base station or network (e.g., through predefined signaling (e.g., SIB signaling, MAC signaling, RRC signaling). For example, "A may be configured" may include "a base station or network (pre)configures/defines or informs the UE of A". Alternatively, the wording "configuration or definition" may be interpreted as being configured or defined in advance by the system. For example, "A may be configured" may include "A is configured/defined in advance by the system".

Refer to the standard documentation, some procedures and technical specifications that are related to this disclosure are as follows.

[Table 11]

| 3GPP TS 38.321 V16.2.1 |
|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. |
| NOTE 1: If Sidelink resource allocation mode 1 is configured by RRC, a DRX functionality is not configured. |
| RRC controls DRX operation by configuring the following parameters: |
| - *drx-onDurationTimer*: the duration at the beginning of a DRX cycle; |
| - *drx-SlotOffset:* the delay before starting the *drx-onDurationTimer*; |
| - *drx-InactivityTimer*: the duration after the PDCCH occasion in which a PDCCH indicates a new UL or DL transmission for the MAC entity; |
| - *drx-RetransmissionTimerDL* (per DL HARQ process except for the broadcast process): the maximum duration until a DL retransmission is received; |
| - *drx-RetransmissionTimerUL* (per UL HARQ process): the maximum duration until a grant for UL retransmission is received; |
| - *drx-LongCycleStartOffset*: the Long DRX cycle and *drx-StartOffset* which defines the subframe where the Long and Short DRX cycle starts; |
| - *drx-ShortCycle* (optional): the Short DRX cycle; |
| - *drx-ShortCycleTimer* (optional): the duration the UE shall follow the Short DRX cycle; |
| - *drx-HARQ-RTT-TimerDL* (per DL HARQ process except for the broadcast process): the minimum duration before a DL assignment for HARQ retransmission is expected bv the MAC entity; |
| - *drx-HARQ-RTT-TimerUL* (per UL HARQ process): the minimum duration before a UL HARQ retransmission grant is expected by the MAC entity; |
| - *ps-Wakeup* (optional): the configuration to start associated *drx-onDurationTimer* in case DCP is monitored but not detected; |
| - *ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started; |

(continued)

| 3GPP TS 38.321 V16.2.1 |
|---|
|       - *ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started. <br><br> Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer*, *drx-InactivityTimer*. The DRX parameters that are common to the DRX groups are: *drx-SlotOffset, drx-RetransmissionTimerDL, drx-RetransmissionTimerUL, drx-LongCycleStartOffset, drx-ShortCycle* (optional), *drx-ShortCycleTimer* (optional), *drx-HARQ-RTT-TimerDL*, and *drx-HARQ-RTT-TimerUL*. |

[Table 12]

| When a DRX cycle is configured, the Active Time for Serving Cells in a DRX group includes the time while: |
|---|
|       - *drx-onDurationTimer* or *drx-InactivityTimer* configured for the DRX group is running; or <br>      - *drx-RetransmissionTimerDL* or *drx-RetransmissionTimerUL* is running on any Serving Cell in the DRX group; or <br>      - *ra-ContentionResolutionTimer* (as described in clause 5.1.5) or *msgB-ResponseWindow* (as described in clause 5.1.4a) is running; or <br>      - a Scheduling Request is sent on PUCCH and is pending (as described in clause 5.4.4); or <br>      - a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a). <br> When DRX is configured, the MAC entity shall: <br>      1> if a MAC PDU is received in a configured downlink assignment: <br>            2> start the *drx-HARQ-RTT-TimerDL* for the corresponding HARQ process in the first symbol after the end of the corresponding transmission carrying the DL HARQ feedback; <br>            2> stop the *drx-RetransmissionTimerDL* for the corresponding HARQ process. <br>      1> if a MAC PDU is transmitted in a configured uplink grant and LBT failure indication is not received from lower layers: <br>            2> start the *drx-HARQ-RTT-TimerUL* for the corresponding HARQ process in the first symbol after the end of the first repetition of the corresponding PUSCH transmission; <br>            2> stop the *drx-RetransmissionTimerUL* for the corresponding HARQ process. <br>      1> if a *drx-HARQ-RTT-TimerDL* expires: <br>            2> if the data of the corresponding HARQ process was not successfully decoded: <br>                  3> start the *drx-RetransmissionTimerDL* for the corresponding HARQ process in the first symbol after the expiry of *drx-HARQ-RTT-TimerDL*. <br>      1> if a *drx-HARQ-RTT-TimerUL* expires: <br>            2> start the *drx-RetransmissionTimerUL* for the corresponding HARQ process in the first symbol after the expiry of *drx-HARQ-RTT-TimerUL*. <br>      1> if a DRX Command MAC CE or a Long DRX Command MAC CE is received: <br>            2> stop *drx-onDurationTimer* for each DRX group; <br>            2> stop *drx-InactivityTimer* for each DRX group. <br>      1> if *drx-InactivityTimer* for a DRX group expires: <br>            2> if the Short DRX cycle is configured: |

(continued)

| |
|---|
| 3> start or restart *drx-ShortCycleTimer* for this DRX group in the first symbol after the expiry of *drx-InactivityTimer*; |
| 3> use the Short DRX cycle for this DRX group. |
| 2> else: |
| 3> use the Long DRX cycle for this DRX group. |
| 1> if a DRX Command MAC CE is received: |
| 2> if the Short DRX cycle is configured: |
| 3> start or restart *drx-ShortCycleTimer* for each DRX group in the first symbol after the end of DRX Command MAC CE reception; |
| 3> use the Short DRX cycle for each DRX group. |
| 2> else: |
| 3> use the Long DRX cycle for each DRX group. |

[Table 13]

| |
|---|
| 1> if *drx-ShortCycleTimer* for a DRX group expires: |
| 2> use the Long DRX cycle for this DRX group. |
| 1> if a Long DRX Command MAC CE is received: |
| 2> stop *drx-ShortCycleTimer* for each DRX group; |
| 2> use the Long DRX cycle for each DRX group. |
| 1> if the Short DRX cycle is used for a DRX group, and [(SFN × 10) + subframe number] modulo (*drx-ShortCycle*) = (*drx-StartOffset*) modulo (*drx-ShortCycle*): |
| 2> start *drx-onDurationTimer* for this DRX group after *drx-SlotOffset* from the beginning of the subframe. |
| 1> if the Long DRX cycle is used for a DRX group, and [(SFN × 10) + subframe number] modulo (*drx-LongCycle*) = *drx-StartOffset*: |
| 2> if DCP monitoring is configured for the active DL BWP as specified in TS 38.213 [6], clause 10.3: |
| 3> if DCP indication associated with the current DRX cycle received from lower layer indicated to start *drx-onDurationTimer*, as specified in TS 38.213 [6]; or |
| 3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms prior to start of the last DCP occasion, or within BWP switching interruption length, or during a measurement gap, or when the MAC entity monitors for a PDCCH transmission on the search space indicated by *recoverySearchSpaceId* of the SpCell identified by the C-RNTI while the *ra-ResponseWindow* is running (as specified in clause 5.1.4); or |
| 3> if *ps-Wakeup* is configured with value *true* and DCP indication associated with the current DRX cycle has not been received from lower layers: 4> start *drx-onDurationTimer* after *drx-SlotOffset* from the beginning of the subframe. |
| 2> else: |
| 3> start *drx-onDurationTimer* for this DRX group after *drx-SlotOffset* from the beginning of the subframe. |
| NOTE 2: In case of unaligned SFN across carriers in a cell group, the SFN of the SpCell is used to calculate the DRX duration. |
| 1> if a DRX group is in Active Time: |
| 2> monitor the PDCCH on the Serving Cells in this DRX group as specified in TS 38.213 [6]; |

(continued)

| |
|---|
| 2> if the PDCCH indicates a DL transmission:<br><br>  3> start the *drx-HARQ-RTT-TimerDL* for the corresponding HARQ process in the first symbol after the end of the corresponding transmission carrying the DL HARQ feedback;<br><br>NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback.<br><br>  3> stop the *drx-RetransmissionTimerDL* for the corresponding HARQ process.<br><br>  3> if the PDSCH-to-HARQ_feedback timing indicate a non-numerical k1 value as specified in TS 38.213 [6]:<br><br>4> start the *drx-RetransmissionTimerDL* in the first symbol after the PDSCH transmission for the corresponding HARQ process. |

[Table 14]

| |
|---|
| 2> if the PDCCH indicates a UL transmission:<br><br>  3> start the *drx-HARQ-RTT-TimerUL* for the corresponding HARQ process in the first symbol after the end of the first repetition of the corresponding PUSCH transmission;<br><br>  3> stop the *drx-RetransmissionTimerUL* for the corresponding HARQ process.<br><br>2> if the PDCCH indicates a new transmission (DL or UL) on a Serving Cell in this DRX group:<br><br>  3> start or restart *drx-InactivityTimer* for this DRX group in the first symbol after the end of the PDCCH reception.<br><br>2> if a HARQ process receives downlink feedback information and acknowledgement is indicated:<br><br>  3> stop the *drx-RetransmissionTimerUL* for the corresponding HARQ process.<br><br>1> if DCP monitoring is configured for the active DL BWP as specified in TS 38.213 [6], clause 10.3; and<br><br>1> if the current symbol n occurs within *drx-onDurationTimer* duration; and<br><br>1> if *drx-onDurationTimer* associated with the current DRX cycle is not started as specified in this clause:<br><br>  2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause:<br><br>    3> not transmit periodic SRS and semi-persistent SRS defined in TS 38.214 [7];<br><br>    3> not report semi-persistent CSI configured on PUSCH;<br><br>    3> if *ps-TransmitPeriodicL1-RSRP* is not configured with value *true*:<br><br>    4> not report periodic CSI that is L1-RSRP on PUCCH.<br><br>    3> if *ps-TransmitOtherPeriodicCSI* is not configured with value *true*:<br><br>    4> not report periodic CSI that is not L1-RSRP on PUCCH.<br><br>1> else: |

(continued)

| |
|---|
| 2> in current symbol n, if a DRX group would not be in Active Time considering grants/ assignments scheduled on Serving Cell(s) in this DRX group and DRX Command MAC CE/Long DRX Command MAC CE received and Scheduling Request sent until 4 ms prior to symbol n when evaluating all DRX Active Time conditions as specified in this clause: |
|       3> not transmit periodic SRS and semi-persistent SRS defined in TS 38.214 [7] in this DRX group; |
|       3> not report CSI on PUCCH and semi-persistent CSI configured on PUSCH in this DRX group. |
| 2> if CSI masking (*csi-Mask*) is setup by upper layers: |
|       3> in current symbol n, if *drx-onDurationTimer* of a DRX group would not be running considering grants/ assignments scheduled on Serving Cell(s) in this DRX group and DRX Command MAC CE/Long DRX Command MAC CE received until 4 ms prior to symbol n when evaluating all DRX Active Time conditions as specified in this clause; and |
|       4> not report CSI on PUCCH in this DRX group. |
| NOTE 4: If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX group in which this PUCCH is configured, it is up to UE implementation whether to report this CSI multiplexed with other UCI(s). |
| Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected. |
| The MAC entity needs not to monitor the PDCCH if it is not a complete PDCCH occasion (e.g. the Active Time starts or ends in the middle of a PDCCH occasion). |

On the other hand, NR V2X in Release 16 did not support power saving operation of UEs, and NR V2X in Release 17 will support power saving operation of UEs (e.g., power saving UEs).

In this disclosure, an SL DRX timer operation method based on mode 2 periodic resource reservation of a transmitting UE for power saving operation of a receiving UE performing Sidelink (SL) DRX operation is proposed. In the following description, "when, if, in case of" may be replaced by "based on".

According to the prior art, when a transmitting UE performs multiple MAC PDU transmissions, it is possible to transmit SL data (e.g., periodic SL data) by reserving transmission resources through periodic resource reservation.

According to one embodiment of the present disclosure (Proposal 1.), when a transmitting UE performs periodic resource reservation to transmit multiple MAC PDUs, an SL DRX operation of a receiving UE is proposed as follows.

For example, if a receiving UE receives resource reservation information over a plurality of periods by receiving an SCI, the receiving UE may wake up (or transition to active mode) at the first resource of each period (as indicated in the SCI) and perform monitoring/decoding operations on PSCCH/PSSCH transmitted by a transmitting UE. For example, a receiving UE may wake up at a resource location based on resource reservation information without SL DRX timer operation, and may also operate in sleep mode until the next resource point when a transmission is completed using the resource.

For example, if a receiving UE successfully decodes a PSCCH/PSSCH at a resource location within each period of a plurality of periods of reserved resources reserved by a transmitting UE and transmits a PSFCH (HARQ ACK feedback) to the transmitting UE, the receiving UE may operate in sleep mode until the start point of the initial resource of the next period, or may not perform monitoring/decoding operations for a PSCCH/PSSCH of a transmitting UE. Then, a receiving UE may transition to active mode at the initial resource point of the next period and perform a monitoring/decoding operation for a PSCCH/PSSCH of a transmitting UE.

According to one embodiment of the present disclosure (Proposal 1.2), when a transmitting UE has performed periodic resource reservation to transmit multiple MAC PDUs, the resource selection method of the transmitting UE and an SL DRX operation of a receiving UE are proposed as follows.

For example, when a transmitting UE transmits multiple MAC PDUs, it reserves periodic resources over a plurality of periods. That is, the reserved periodic resources may be over a plurality of periods.

At this time, a transmitting UE may select resources such that all SL resources belonging to the first period are included within an SL DRX active time of a receiving UE. That is, a transmitting UE may select resources by limiting the resources to those belonging to a DRX active time of a receiving UE.

For example, the SL DRX active time may include an active time belonging to an SL DRX on-duration timer, an inactivity timer, or a retransmission timer that a receiving UE is currently operating. And, for example, the SL DRX active time may include an active time belonging to an SL DRX on-duration timer, an inactivity timer, or a retransmission timer that a receiving UE will activate in the future by receiving a PSCCH/PSSCH at the location of a retransmission resource reserved via SCI received by the receiving UE. And, for example, the SL DRX active time may include active time belonging to an SL DRX on-duration timer, inactivity timer, or retransmission timer that the receiving UE is currently operating in relation to another SL HARQ process. And, for example, the SL DRX active time may include active time belonging to an SL DRX on-duration timer, inactivity timer, or retransmission timer that the receiving UE will operate in the future by receiving a PSCCH/PSSCH at the location of a retransmission resource reserved via SCI that it has received in association with another SL HARQ process.

For example, a transmitting UE may select a transmission resource starting in the second period as follows.

For example (Method 1), a transmitting UE may select all of resources included within an SL DRX inactive time of a receiving UE as transmission resources belonging to the second period (or the remainder of the non-initial period), and transmit a PSCCH/PSSCH based on the selected transmission resources. For example, an SL DRX inactive time may include an interval during which a receiving UE does not monitor/decode a PSCCH/PSSCH.

In this case, for example, a receiving UE may not receive a PSCCH/PSSCH transmitted by a transmitting UE from the selected transmission resource because the location of the selected transmission resource is within an SL DRX inactive time interval. Therefore, a transmitting UE may need to perform a resource reselection procedure, which may select all the resources within the second period (or the remainder of the non-initial period) as resources that belong to an SL DRX active time period of a receiving UE. For example, the SL DRX active time may include a period during which a receiving UE monitors/decodes a PSCCH/PSSCH.

In this case, for example, when all resources of the second period (or the remainder of the non-initial period) are included within a DRX active time of a receiving UE through the resource reselection procedure, a transmitting UE may set the resource reservation interval (in the SCI) to "0", thereby causing it to operate in a single MAC PDU transmission scheme (aperiodic transmission scheme). In other words, although it is a transmission procedure initiated as a periodic transmission mode, a transmitting UE may operate such that only resource information (reselected resources) within the period in which the SCI is received is included in the SCI, the same as in a single MAC PDU transmission scheme. And, for example, a transmitting UE may again reserve resources and transmit SL data in a multiple MAC PDU transmission scheme (a periodic resource reservation transmission scheme) by setting the resource reservation interval to a non-zero value again in SCI on the last transmission resource among the transmission resources included in the resource information transmitted by switching to the single MAC PDU scheme as described above.

For example (Method 2), a transmitting UE may select resources that are included within an SL DRX inactive time of a receiving UE as some of the transmission resources belonging to the second period (or the remainder of the non-initial period) and resources that are included within an SL DRX active time of the receiving UE as the remaining some of the resources to transmit a PSCCH/PSSCH. In this case, for example, a receiving UE may not receive a PSCCH/PSSCH transmitted by a transmitting UE during an SL DRX inactive time interval. Therefore, a transmitting UE may need to perform a resource reselection procedure, and through the resource reselection procedure, the transmitting UE may reselect a resource belonging to an SL DRX inactive time of the second period (or the remainder of the non-initial period) of a receiving UE to a resource that is included within an SL DRX active time of the receiving UE.

For example, a transmitting UE may, through a resource reselection procedure, reselect a resource that belongs to an SL DRX inactive time of the second period of a receiving UE (or the remainder of a non-initial period) to a resource that is included within a DRX active time of the receiving UE. Further, for example, when reserving a resource after resource reselection, a transmitting UE may set the resource reservation interval (in SCI) to "0" to cause the transmitting UE to operate in a single MAC PDU transmission scheme (aperiodic transmission scheme). That is, although it is a transmission procedure initiated in a periodic transmission scheme, a transmitting UE may operate such that SCI includes only resource information (reselected resources) within the period in which the SCI is received, the same as in a single MAC PDU transmission scheme. And, for example, a transmitting UE may again reserve resources and transmit SL data in a multiple MAC PDU transmission scheme (a periodic resource reservation transmission scheme) by setting the resource reservation interval to a non-zero value again in the SCI on the last transmission resource among the transmission resources included in the resource information transmitted by switching to the single MAC PDU scheme as described above.

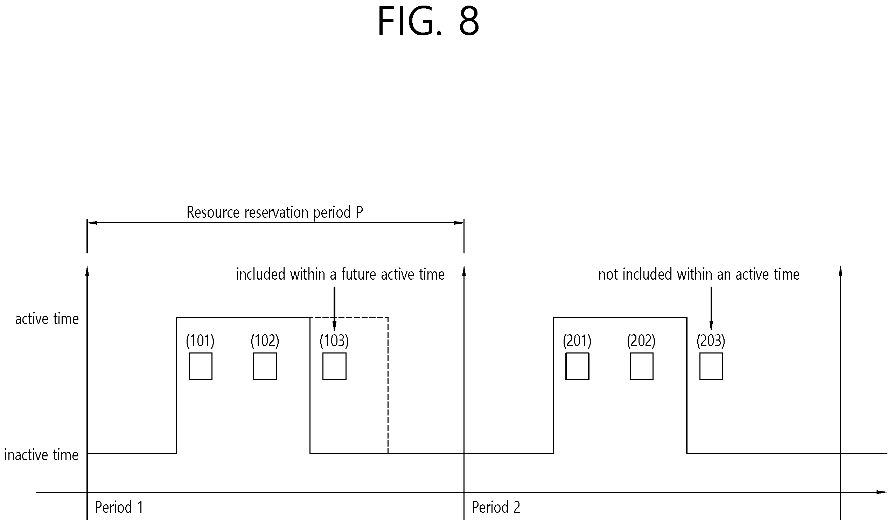

FIG. 8 shows an embodiment in which a transmission UE schedules periodic transmission resources, according to one embodiment of the present disclosure. The embodiment of FIG. 8 may be combined with various embodiments of the present disclosure.

Referring to FIG. 8, transmission resources 101, 102, 103, 201, 202, and 203 selected by a transmitting UE are shown. For example, 101, 102, and 103 are resources included in a period 1, which is the first period among the transmission resource reservation periods, and 201, 202, and 203 are resources included in a period 2, which is the second period among the transmission resource reservation periods.

For example, when selecting resources for the resources included within the period 1 (that is, when selecting 101, 102, and 103), a transmitting UE may only select resources that are included within an active time of a receiving UE. Here, the active time may include various active times described in the present disclosure. That is, in FIG. 8, 103 may be selected to be included within a future active time when an SL DRX timer is expected to be operated based on 102 or the reception of a PSCCH and/or PSSCH to be transmitted based on 102, rather than an active time based on an SL DRX timer that is currently in operation.

For example, unlike the period 1, resources included in the period 2 may be selected without consideration of an active time of a receiving UE. For example, resources after 101, 102, and 103 by the resource reservation cycle P may be selected as 201, 202, and 203. Here, since the range of resources that can be selected as resources in the period 2 is wider than in the period 1 (where active time is considered), resources may be used more efficiently and the resource selection operation may be more flexible.

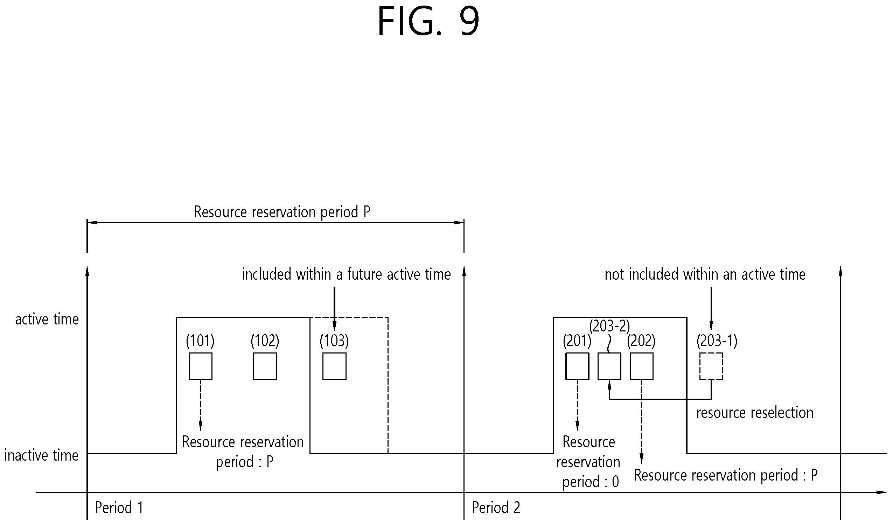

FIG. 9 shows an embodiment in which a transmission UE reserves periodic transmission resources and reselects them, according to one embodiment of the present disclosure. The embodiment of FIG. 9 may be combined with various embodiments of the present disclosure.

Referring to FIG. 9, transmission resources 101, 102, 103, 201, 202, 203-1, and 203-2 selected by a transmitting UE are shown. For example, 101, 102, and 103 are resources included within a period 1, which is the first period of transmission resource reservation periods, and 201, 202, 203-1, and 203-2 are resources included within a period 2, which is the second period of transmission resource reservation periods. For example, 203-2 may be a reselected resource from 203-1. That is, a transmitting UE may reselect 203-1 to 203-2.

For example, the resource reselection may be performed because the 203-1 is not included within an active time. For example, the resource reselection may be a procedure for reselecting 203-1 to 203-2, which is included in an active time of a receiving UE, because the 203-1 is not included within an active time.

For example, a transmitting UE may reserve 101, 102, 103, 201, 202, and 203 in a periodic resource reservation scheme. Accordingly, in a transmission performed based on 101, 102, and 103, the resource reservation period in SCI may be set to P. Subsequently, for example, when a resource reselection as described above is performed in period 2, in a transmission within period 2 after the resource reselection is performed, a transmitting UE may transmit by setting the resource reservation period on SCI to 0 in a transmission except for the last resource within the period 2. That is, a transmitting UE may perform a transmission operation in a manner of performing an aperiodic transmission for transmissions within the period 2.

Then, for example, at the last transmission resource in the period 2 (i.e., 202), the transmitting UE may transmit by again setting the resource reservation period in SCI to P. That is, a transmitting UE may perform an aperiodic transmission operation limited to that period in which the resource reselection is performed, and in subsequent periods, the transmitting UE may again perform a transmission operation in periodic reservation scheme. For example, although not shown in the figure, as resources within period 3 after the period 2, resources that are after 201, 203-2, and 202 by P may be reserved through SCI transmitted in the transmission based on the 202.

An operation of the present disclosure may be applied/extended to an SL DRX inactive timer operation as well as an SL DRX retransmission timer (or an SL DRX timer to operate with an active time).

An SL DRX configuration referred to in the present disclosure may include at least one of the following parameters.

[Table 15]

| | ● Sidelink DRX configurations |
|---|---|
| ✔ *SL drx-onDurationTimer*: the duration at the beginning of a SL DRX Cycle; <br> ✔ *SL drx-SlotOffset*: the delay before starting the sl *drx-onDurationTimer;* <br> ✔ *SL drx-InactivityTimer*: the duration after the PSCCH occasion in which a PSCCH indicates a new SL transmission for the MAC entity; <br> ✔ *SL drx-StartOffset:* the subframe where the SL DRX cycle start; <br> ✔ *SL drx-Cycle:* the SL DRX cycle; <br> ✔ *SL drx-HARQ-RTT- Timer* (per HARQ process or per sidelink process): the minimum duration before an assignment for HARQ retransmission is expected by the MAC entity. <br> ✔ *SL drx-RetransmissionTimer* (per HARQ process or per sidelink process): the maximum duration until a retransmission is received. | |

For example, the Uu DRX timer below referenced in this disclosure may be used for the following purposes.

drx-HARQ-RTT-TimerSL timer: it may represent an interval where a transmitting UE (UE supporting a Uu DRX operation) performing SL communication based on SL resource allocation mode 1 does not perform monitoring for a PDCCH (or, DCI) for SL mode 1 resource allocation from a base station.

drx-RetransmissionTimerSL timer: It may indicate an interval during which a transmitting UE (UE supporting a Uu DRX operation) performing SL communication based on SL resource allocation mode 1 performs monitoring for a PDCCH (or, DCI) for SL mode 1 resource allocation from a base station.

The following SL DRX timers mentioned in this disclosure may be used for the following purposes.

SL DRX on-duration timer: Indicates the period of time during which a UE performing SL DRX operation should operate as the default active time to receive PSCCH/PSSCH from other UE.

SL DRX inactivity timer: may represent an interval that extends an SL DRX on-duration interval, which is an interval during which a UE performing SL DRX operation must operate as active time by default to receive PSCCH/PSSCH from other UE. That is, an SL DRX on-duration timer may be extended by the SL DRX inactivity timer interval. Furthermore, when a UE receives a PSCCH for a new TB (first SCI and/or second SCI) or a new packet (new PSSCH transmission) from other UE, the UE may extend the SL DRX on-duration timer by starting an SL DRX inactivity timer.

SL DRX HARQ RTT timer: may indicate an interval during which a UE performing SL DRX operation may operate in sleep mode until it receives a retransmission packet (or PSSCH assignment) from other UE. That is, if a UE starts the SL DRX HARQ RTT timer, the UE may determine that other UE will not transmit a sidelink retransmission packet to it until the SL DRX HARQ RTT timer expires and may operate in sleep mode during that timer. Or, the UE may not perform monitoring of an SL channel/signal which the counterpart UE transmits, until the expiration of an SL DRX HARQ RTT timer.

SL DRX retransmission timer: may indicate an interval of time during which a UE performing SL DRX operation is active time to receive retransmission packets (or PSSCH assignments) transmitted by other UE. For example, when an SL DRX HARQ RTT timer expires, an SL DRX retransmission timer may start. During this timer period, a UE may monitor a reception of retransmission sidelink packets (or PSSCH allocations) transmitted by other UE.

In addition, in the following description, the names of the timers (SL DRX On-Duration Timer, SL DRX Inactivity timer, SL HARQ RTT Timer, SL DRX Retransmission Timer, etc.) are exemplary, and timers that perform the same/similar functions based on what is described in each timer can be considered the same/similar timer regardless of the name.

The proposal in this disclosure may be a solution that may also be applied and extended to address the problem of loss due to interruption in Uu bandwidth part (BWP) switching.

Furthermore, the proposal of the present disclosure may be a solution that may also be applied and extended to address the problem of loss due to interruption caused by SL BWP switching, for example, when a UE supports SL multiple BWP.

The proposals in this disclosure may be extended to parameters (and timers) included in default/common SL DRX configurations or default/common SL DRX patterns or default/common SL DRX configurations, as well as parameters (and timers) included in UE pair specific SL DRX configurations or UE pair specific SL DRX patterns or UE pair specific SL DRX configurations.

Furthermore, for example, an on-duration term referred to in the present disclosure may be extended and interpreted as an active time interval, and an off-duration term referred to in the present disclosure may be extended and interpreted as a sleep time interval. For example, an active time may mean a period of time when a UE is operating in a wake up state (RF module is on) to receive/transmit radio signals. For example, a sleep time may mean an interval during which a UE operates in a sleep mode state (RF module is off) to save power. For example, in the sleep time, it does not imply that a transmitting UE is obligated to operate in sleep mode, i.e., if needed, the UE may be allowed to operate in active time for a short period of time to perform a sensing operation/transmission operation, even during a sleep period.

Further, for example, whether (some of) the proposed schemes/rules of this disclosure apply and/or the related parameters (e.g., thresholds) may be configured specifically (or differently or independently) depending on the resource pool, congestion level, service priority (and/or type), QoS requirements (e.g., latency, reliability) or PQI, traffic type (e.g., (aperiodic) generation), SL transport resource allocation mode (Mode 1, Mode 2), etc.

For example, whether to apply the proposals of the present disclosure (and/or related parameter configuration value) may be configured specifically (and/or, independently and/or differently) for at least one of a resource pool (e.g., a resource pool where a PSFCH is configured, a resource pool where a PSFCH is not configured), service/packet type (and/or priority), or QoS requirement (e.g., URLLC/EMBB traffic, reliability, latency), PQI, PFI, cast type (e.g., unicast, groupcast, broadcast), (resource pool) congestion level (e.g., CBR), SL HARQ feedback mode (e.g., NACK only feedback, ACK/NACK feedback), a HARQ feedback enabled MAC PDU (and/or a HARQ feedback disabled MAC PDU) transmission case, whether PUCCH based SL HARQ feedback reporting operation is configured, a case where pre-emption (and/or re-evaluation) (or, -based resource reselection) is (not) performed, (L2 or L1) (source and/or destination) ID, (L2 or L1) (a combination of a source layer ID and a destination layer ID) identifier, (L2 or L1) (a combination of a pair of a source layer ID and an destination layer ID, and a cast type) identifier, a direction of a pair of a source layer ID and a destination layer ID, PC5 RRC connection/link, a case where an SL DRX is (not) performed (or, supported), SL mode type (resource allocation mode 1, resource allocation mode 2), a case where (a)periodic resource reservation is performed.

For example, the term specific time as used in the present disclosure may refer to a predefined amount of time for a UE to receive sidelink signaling or sidelink data from another UE, or a period of time, or a specific timer (SL DRX retransmission timer, SL DRX inactivity timer, or a timer to ensure a receiving UE to operate as an active time in DRX operation) time, during which a UE is active.

Further, for example, whether the proposals and proposed rules in this disclosure apply (and/or the associated parameter configuration values) may also apply to mmWave SL operation.

According to the prior art, in a transmission operation of multiple MAC PDUs, resources in periods after the first period may be selected such that they are necessarily included within an active time of a receiving UE. Thus, the resources selected may be more limited than necessary, which may result in waste of radio resources. According to an embodiment of the present disclosure, only for resources within the first period, the active time is considered in the selection, and within the second period, resources are selected regardless of the active time, so that resources can be used more efficiently.

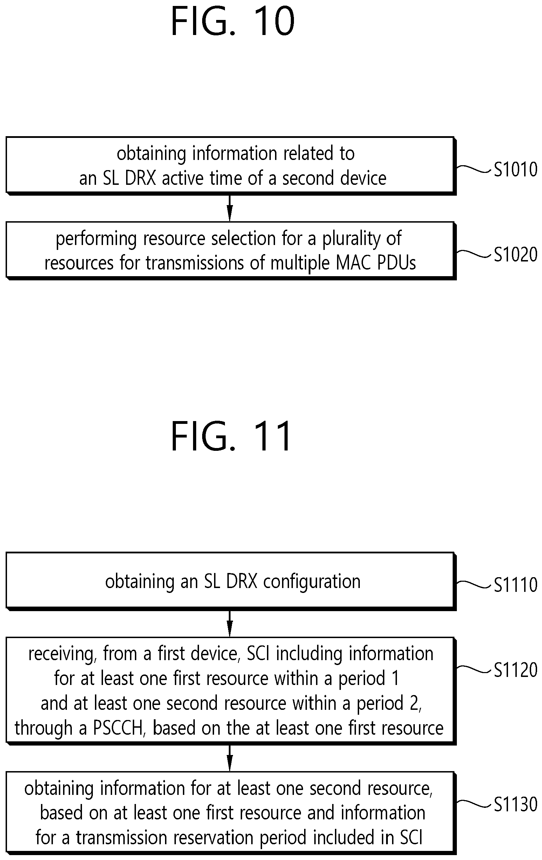

FIG. 10 shows a procedure for a first device to perform wireless communication, according to one embodiment of the present disclosure. The embodiment of FIG. 10 may be combined with various embodiments of the present disclosure.

Referring to FIG. 10, in step S1010, a first device may obtain information related to a sidelink, SL, discontinuous reception, DRX, active time of a second device. In step S1020, the first device may perform resource selection for a plurality of resources for transmissions of multiple medium access control, MAC, protocol data units, PDUs. For example, steps of performing the resource selection may include: selecting at least one first resource within a period 1, within the SL DRX active time; and selecting at least one second resource within a period 2, based on the at least one first resource and a resource reservation period, and the period 1 may be the first period related to a resource selection.

For example, the at least one second resource being selected outside the SL DRX active time may be allowed.

For example, the SL DRX active time may include a time during which an SL DRX active timer of an SL DRX configuration which the second device uses is running.

For example, the SL DRX active time may include a time in which an SL DRX active timer of an SL DRX configuration which the second device uses will operate based on the transmissions of the multiple MAC PDUs.

For example, additionally, the first device may trigger resource reselection for the at least one second resource, based on at least one resource among the at least one second resource being not included within the SL DRX active time.

For example, additionally, the first device may reselect the at least one second resource to at least one third resource, based on the triggering and the SL DRX active time. For example, the at least one third resource is included within the SL DRX active time.

For example, additionally, the first device may transmit, to the second device, information for the at least one third resource through sidelink control information, SCI. For example, information for a resource transmission period, included in the SCI, may be 0.

For example, additionally, the first device may transmit, to the second device, SCI including information for the at least one first resource and the at least one second resource through a physical sidelink control channel, PSCCH.

For example, the information for the at least one first resource and the at least one second resource may be transmitted based on information for a transmission reservation period included in the SCI.

For example, the at least one second resource may be obtained by the second device, based on the at least one first resource and the transmission reservation period.

For example, additionally, the first device may transmit, to the second device, a first MAC PDU, through a first physical sidelink shared channel, PSSCH, based on the at least one first resource; and transmitting, to the second device, a second MAC PDU through a second PSSCH, based on the at least one second resource.

For example, the first MAC PDU and the second MAC PDU may be different.

For example, the at least one first resource may be randomly selected within the SL DRX active time.

The embodiments described above may be applied to various devices described below. First, a processor 102 of a first device 100 may obtain information related to a sidelink, SL, discontinuous reception, DRX, active time of a second device. And, the processor 102 of the first device 100 may perform resource selection for a plurality of resources for transmissions of multiple medium access control, MAC, protocol data units, PDUs. For example, steps of performing the resource selection may include: selecting at least one first resource within a period 1, within the SL DRX active time; and selecting at least one second resource within a period 2, based on the at least one first resource and a resource reservation period, and the period 1 may be the first period related to a resource selection.

According to an embodiment of the present disclosure, a first device for performing wireless communication may be proposed. For example, the first device may comprise: one or more memories storing instructions; one or more transceivers; and one or more processors connected to the one or more memories and the one or more transceivers.

For example, the one or more processors may execute the instructions to: obtain information related to a sidelink, SL, discontinuous reception, DRX, active time of a second device; and perform resource selection for a plurality of resources for transmissions of multiple medium access control, MAC, protocol data units, PDUs, wherein steps of performing the resource selection may include: selecting at least one first resource within a period 1, within the SL DRX active time; and selecting at least one second resource within a period 2, based on the at least one first resource and a resource reservation period, and wherein the period 1 may be the first period related to a resource selection.

For example, the at least one second resource being selected outside the SL DRX active time may be allowed.

For example, the SL DRX active time may include a time during which an SL DRX active timer of an SL DRX configuration which the second device uses is running.

For example, the SL DRX active time may include a time in which an SL DRX active timer of an SL DRX configuration which the second device uses will operate based on the transmissions of the multiple MAC PDUs.

For example, additionally, the first device may trigger resource reselection for the at least one second resource, based on at least one resource among the at least one second resource being not included within the SL DRX active time.

For example, additionally, the first device may reselect the at least one second resource to at least one third resource, based on the triggering and the SL DRX active time. For example, the at least one third resource is included within the SL DRX active time.

For example, additionally, the first device may transmit, to the second device, information for the at least one third resource through sidelink control information, SCI. For example, information for a resource transmission period, included in the SCI, may be 0.

For example, additionally, the first device may transmit, to the second device, SCI including information for the at least one first resource and the at least one second resource through a physical sidelink control channel, PSCCH.

For example, the information for the at least one first resource and the at least one second resource may be transmitted based on information for a transmission reservation period included in the SCI.

For example, the at least one second resource may be obtained by the second device, based on the at least one first resource and the transmission reservation period.

For example, additionally, the first device may transmit, to the second device, a first MAC PDU, through a first physical sidelink shared channel, PSSCH, based on the at least one first resource; and transmitting, to the second device, a second MAC PDU through a second PSSCH, based on the at least one second resource.

For example, the first MAC PDU and the second MAC PDU may be different.

For example, the at least one first resource may be randomly selected within the SL DRX active time.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: obtain information related to a sidelink, SL, discontinuous reception, DRX, active time of a second UE; and perform resource selection for a plurality of resources for transmissions of multiple medium access control, MAC, protocol data units, PDUs, wherein steps of performing the resource selection may include: selecting at least one first resource within a period 1, within the SL DRX active time; and selecting at least one second resource within a period 2, based on the at least one first resource and a resource reservation period, and wherein the period 1 may be the first period related to a resource selection.

According to an embodiment of the present disclosure, a non-transitory computer-readable storage medium storing instructions may be proposed. For example, the instructions, when executed, may cause a first device to: obtain information related to a sidelink, SL, discontinuous reception, DRX, active time of a second device; and perform resource selection for a plurality of resources for transmissions of multiple medium access control, MAC, protocol data units, PDUs, wherein steps of performing the resource selection may include: selecting at least one first resource within a period 1, within the SL DRX active time; and selecting at least one second resource within a period 2, based on the at least one first resource and a resource reservation period, and wherein the period 1 may be the first period related to a resource selection.

FIG. 11 shows a procedure for a second device to perform wireless communication, according to one embodiment of the present disclosure. The embodiment of FIG. 11 may be combined with various embodiments of the present disclosure.

Referring to FIG. 11, in step S1110, a second device may obtain a sidelink, SL, discontinuous reception, DRX, configuration. In step S1120, the second device may receive, from a first device, sidelink control information, SCI, including information for at least one first resource within a period 1 and at least one second resource within a period 2, through a physical sidelink control channel, PSCCH, based on the at least one first resource. In step S 1 130, the second device may obtain information for the at least one second resource, based on the at least one first resource and information for a transmission reservation period included in the SCI. For example, the at least one first resource may be selected within an SL DRX active time of the SL DRX configuration, the at least one second resource may be selected based on the at least one first resource and the resource reservation period, and the period 1 may be the first period related to resource selection.

For example, additionally, the second device may receive, from the first device, information for at least one third resource. For example, the at least one third resource may be at least one resource to which the at least one second resource is reselected based on triggering of resource reselection for the at least one second resource and the SL DRX active time.

The embodiments described above may be applied to various devices described below. First, a processor 202 of a second device 200 may obtain a sidelink, SL, discontinuous reception, DRX, configuration. And, the processor 202 of the second device 200 may control a transceiver 206 to receive, from a first device 100, sidelink control information, SCI, including information for at least one first resource within a period 1 and at least one second resource within a period 2, through a physical sidelink control channel, PSCCH, based on the at least one first resource. And, the processor 202 of the second device 200 may obtain information for the at least one second resource, based on the at least one first resource and information for a transmission reservation period included in the SCI. For example, the at least one first resource may be selected within an SL DRX active time of the SL DRX configuration, the at least one second resource may be selected based on the at least one first resource and the resource reservation period, and the period 1 may be the first period related to resource selection.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: obtain a sidelink, SL, discontinuous reception, DRX, configuration; receive, from a first device, sidelink control information, SCI, including information for at least one first resource within a period 1 and at least one second resource within a period 2, through a physical sidelink control channel, PSCCH, based on the at least one first resource; and obtain information for the at least one second resource, based on the at least one first resource and information for a transmission reservation period included in the SCI, wherein the at least one first resource may be selected within an SL DRX active time of the SL DRX configuration, wherein the at least one second resource may be selected based on the at least one first resource and the resource reservation period, and wherein the period 1 may be the first period related to resource selection.

For example, additionally, the second device may receive, from the first device, information for at least one third resource. For example, the at least one third resource may be at least one resource to which the at least one second resource is reselected based on triggering of resource reselection for the at least one second resource and the SL DRX active time.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

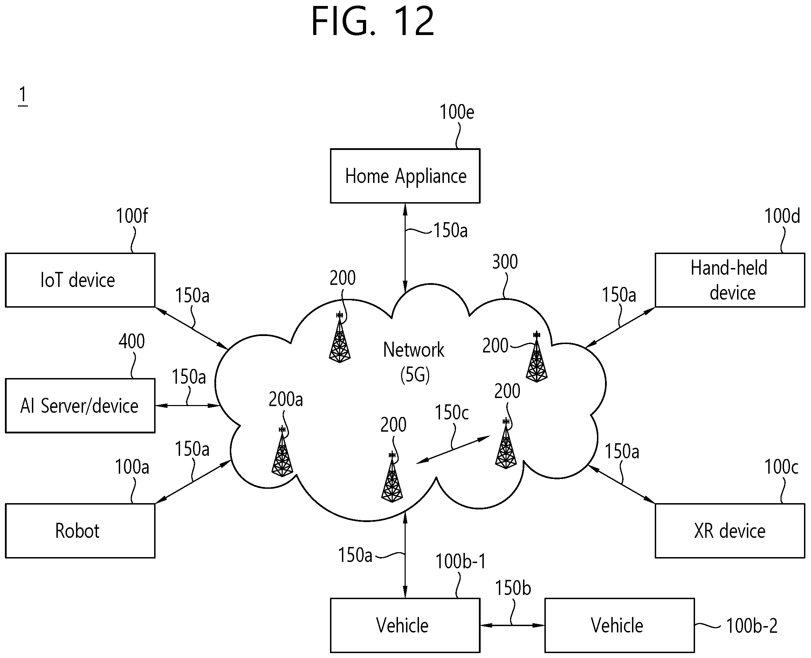

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, the wireless communication technologies implemented in the wireless devices 100a-100f of the present disclosure may include LTE, NR, and 6G, as well as Narrowband Internet of Things for low power communication. In this case, for example, NB-IoT technology may be an example of Low Power Wide Area Network (LPWAN) technology, and may be implemented in specifications such as LTE Cat NB1 and/or LTE Cat NB2, and is not limited to the above names. Additionally or alternatively, the wireless communication technology implemented in the wireless devices 100a-100f of this specification may perform communication based on LTE-M technology. In one example, LTE-M technology may be an example of LPWAN technology and may be referred to by various names, such as enhanced Machine Type Communication (eMTC). For example, LTE-M technology may be implemented as at least one of various specifications, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above names. Additionally or alternatively, the wireless communication technology implemented in the wireless devices 100a-100f of this disclosure may include at least one of ZigBee, Bluetooth, and Low Power Wide Area Network (LPWAN), with consideration for low power communication, and is not limited to the above names. For example, ZigBee technology can create personal area networks (PANs) for small, low-power digital communications based on various specifications, such as IEEE 802.15.4, and may be referred to by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

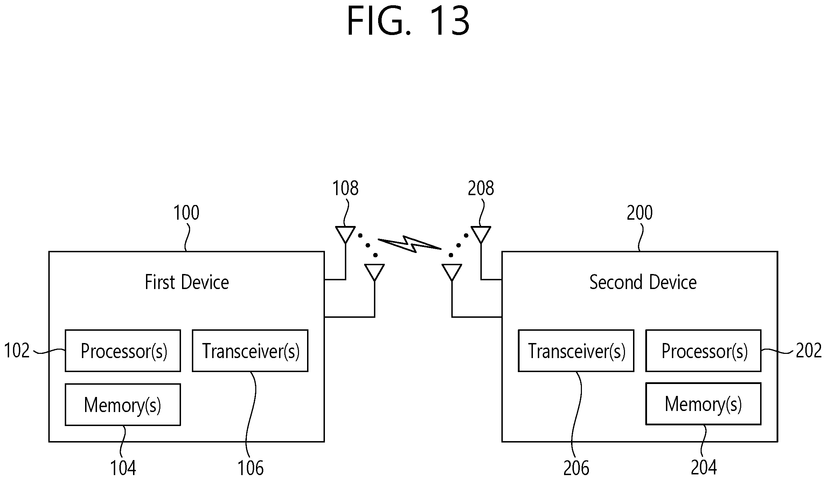

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

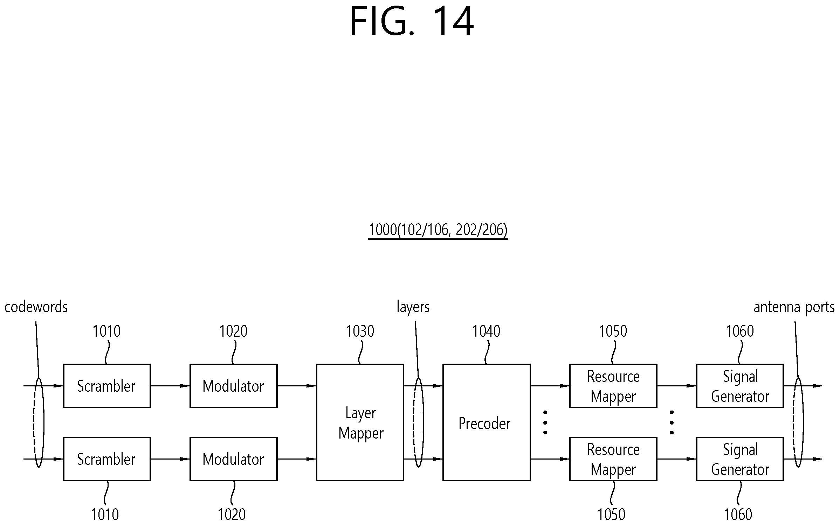

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

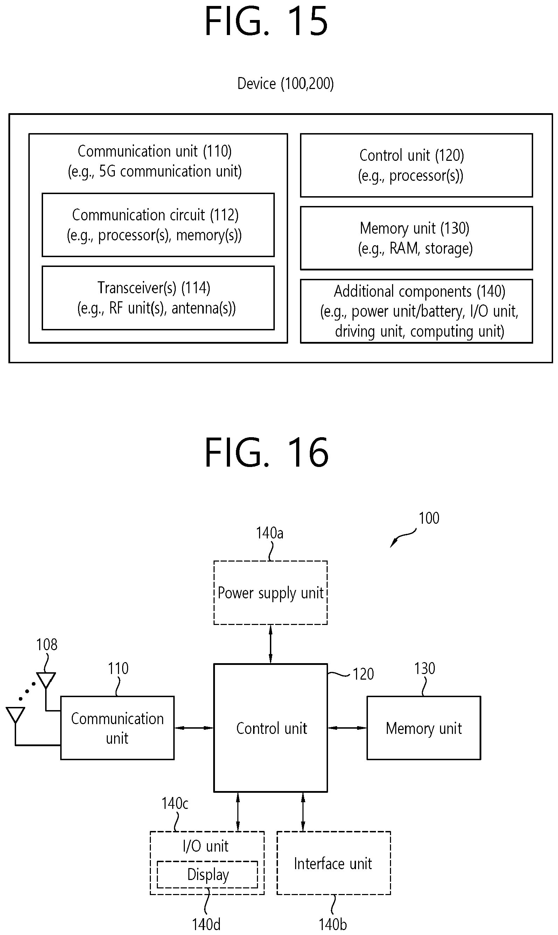

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

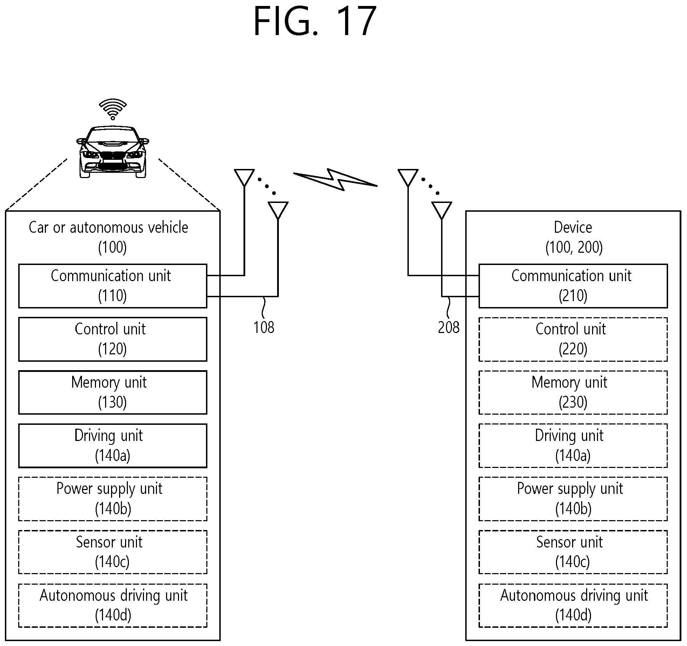

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1.  A method for performing, by a first device, wireless communication, the method comprising:

    obtaining information related to a sidelink, SL, discontinuous reception, DRX, active time of a second device; and performing resource selection for a plurality of resources for transmissions of multiple medium access control, MAC, protocol data units, PDUs,
    wherein steps of performing the resource selection includes:

    selecting at least one first resource within a period 1, within the SL DRX active time; and
    selecting at least one second resource within a period 2, based on the at least one first resource and a resource reservation period, and
    wherein the period 1 is the first period related to a resource selection.

2.  The method of claim 1, wherein the at least one second resource being selected outside the SL DRX active time is allowed.

3.  The method of claim 1, wherein the SL DRX active time includes a time during which an SL DRX active timer of an SL DRX configuration which the second device uses is running.

4.  The method of claim 1, wherein the SL DRX active time includes a time in which an SL DRX active timer of an SL DRX configuration which the second device uses will operate based on the transmissions of the multiple MAC PDUs.

**5.** The method of claim 1, further comprising:
triggering resource reselection for the at least one second resource, based on at least one resource among the at least one second resource being not included within the SL DRX active time.

**6.** The method of claim 5, further comprising:

reselecting the at least one second resource to at least one third resource, based on the triggering and the SL DRX active time,
wherein the at least one third resource is included within the SL DRX active time.

**7.** The method of claim 6, further comprising:

transmitting, to the second device, information for the at least one third resource through sidelink control information, SCI,
wherein information for a resource transmission period, included in the SCI, is 0.

**8.** The method of claim 1, further comprising:
transmitting, to the second device, SCI including information for the at least one first resource and the at least one second resource through a physical sidelink control channel, PSCCH.

**9.** The method of claim 8, wherein the information for the at least one first resource and the at least one second resource is transmitted based on information for a transmission reservation period included in the SCI.

**10.** The method of claim 9, wherein the at least one second resource is obtained by the second device, based on the at least one first resource and the transmission reservation period.

**11.** The method of claim 8, further comprising:

transmitting, to the second device, a first MAC PDU, through a first physical sidelink shared channel, PSSCH, based on the at least one first resource; and
transmitting, to the second device, a second MAC PDU through a second PSSCH, based on the at least one second resource.

**12.** The method of claim 11, wherein the first MAC PDU and the second MAC PDU are different.

**13.** The method of claim 1, wherein the at least one first resource is randomly selected within the SL DRX active time.

**14.** A first device for performing wireless communication, the first device comprising:

one or more memories storing instructions;
one or more transceivers; and
one or more processors connected to the one or more memories and the one or more transceivers, wherein the one or more processors execute the instructions to:

obtain information related to a sidelink, SL, discontinuous reception, DRX, active time of a second device; and
perform resource selection for a plurality of resources for transmissions of multiple medium access control, MAC, protocol data units, PDUs,
wherein steps of performing the resource selection includes:

selecting at least one first resource within a period 1, within the SL DRX active time; and
selecting at least one second resource within a period 2, based on the at least one first resource and a resource reservation period, and
wherein the period 1 is the first period related to a resource selection.

**15.** A device adapted to control a first user equipment, UE, the device comprising:

one or more processors; and
one or more memories operably connectable to the one or more processors and storing instructions, wherein the one or more processors execute the instructions to:

obtain information related to a sidelink, SL, discontinuous reception, DRX, active time of a second UE; and perform resource selection for a plurality of resources for transmissions of multiple medium access control, MAC, protocol data units, PDUs,
wherein steps of performing the resource selection includes:

selecting at least one first resource within a period 1, within the SL DRX active time; and selecting at least one second resource within a period 2, based on the at least one first resource and a resource reservation period, and
wherein the period 1 is the first period related to a resource selection.

16. A non-transitory computer-readable storage medium storing instructions that, when executed, cause a first device to:

obtain information related to a sidelink, SL, discontinuous reception, DRX, active time of a second device; and perform resource selection for a plurality of resources for transmissions of multiple medium access control, MAC, protocol data units, PDUs,
wherein steps of performing the resource selection includes:

selecting at least one first resource within a period 1, within the SL DRX active time; and selecting at least one second resource within a period 2, based on the at least one first resource and a resource reservation period, and
wherein the period 1 is the first period related to a resource selection.

17. A method for performing, by a second device, wireless communication, the method comprising:

obtaining a sidelink, SL, discontinuous reception, DRX, configuration;
receiving, from a first device, sidelink control information, SCI, including information for at least one first resource within a period 1 and at least one second resource within a period 2, through a physical sidelink control channel, PSCCH, based on the at least one first resource; and
obtaining information for the at least one second resource, based on the at least one first resource and information for a transmission reservation period included in the SCI,
wherein the at least one first resource is selected within an SL DRX active time of the SL DRX configuration,
wherein the at least one second resource is selected based on the at least one first resource and the resource reservation period, and
wherein the period 1 is the first period related to resource selection.

18. The method of claim 17, further comprising:

receiving, from the first device, information for at least one third resource,
wherein the at least one third resource is at least one resource to which the at least one second resource is reselected based on triggering of resource reselection for the at least one second resource and the SL DRX active time.

19. A second device for performing wireless communication, the second device comprising:

one or more memories storing instructions;
one or more transceivers; and
one or more processors connected to the one or more memories and the one or more transceivers, wherein the one or more processors execute the instructions to:

obtain a sidelink, SL, discontinuous reception, DRX, configuration;
receive, from a first device, sidelink control information, SCI, including information for at least one first resource within a period 1 and at least one second resource within a period 2, through a physical sidelink control channel, PSCCH, based on the at least one first resource; and
obtain information for the at least one second resource, based on the at least one first resource and information for a transmission reservation period included in the SCI,
wherein the at least one first resource is selected within an SL DRX active time of the SL DRX configuration,

wherein the at least one second resource is selected based on the at least one first resource and the resource reservation period, and
wherein the period 1 is the first period related to resource selection.

**20.** The second device of claim 19, wherein the one or more processors further execute the instructions to:

receive, from the first device, information for at least one third resource,
wherein the at least one third resource is at least one resource to which the at least one second resource is reselected based on triggering of resource reselection for the at least one second resource and the SL DRX active time.

# FIG. 1

FIG. 2

# FIG. 3

FIG. 4

# FIG. 5

| PRB N3 |

$N_{BWP, 2}^{size}$

| PRB 1 |
| PRB 0 |

| PRB N2 |

$N_{BWP, 1}^{size}$

| PRB 1 |
| PRB 0 |

| PRB N1 |

$N_{BWP, 0}^{size}$

| PRB 1 |
| PRB 0 |

CRB 0

$N_{BWP, 2}^{start}$

$N_{BWP, 1}^{start}$

$N_{BWP, 0}^{start}$

Carrier Bandwidth

Freq.

Time

PRB 0 (Point A) in reference resource block

# FIG. 6

(a)

(b)

# FIG. 7

(a)

(b)

(c)

● : TX UE

⊘ : RX UE

# FIG. 8

Resource reservation period P

included within a future active time

not included within an active time

active time

(101)  (102)  (103)

(201)  (202)  (203)

inactive time

Period 1

Period 2

EP 4 456 646 A1

# FIG. 9

Resource reservation period P

included within a future active time

not included within an active time

active time

(101)    (102)    (103)    (201) (203-2) (202)    (203-1)

resource reselection

inactive time

Resource reservation
period : P

Resource
reservation
period : 0

Resource reservation period : P

Period 1    Period 2

Segment

# FIG. 10

| obtaining information related to<br>an SL DRX active time of a second device | S1010 |

↓

| performing resource selection for a plurality of<br>resources for transmissions of multiple MAC PDUs | S1020 |

# FIG. 11

| obtaining an SL DRX configuration | S1110 |

↓

| receiving, from a first device, SCI including information<br>for at least one first resource within a period 1<br>and at least one second resource within a period 2,<br>through a PSCCH, based on the at least one first resource | S1120 |

↓

| obtaining information for at least one second resource,<br>based on at least one first resource and information<br>for a transmission reservation period included in SCI | S1130 |

# FIG. 12

1

100e
Home Appliance

100f
IoT device

300

100d
Hand-held device

150a

200

Network (5G)

200

400
AI Server/device

150a

200a

200

150c

200

100a
Robot

150a

100c
XR device

150a

150a
Vehicle 100b-1

150b

Vehicle 100b-2

EP 4 456 646 A1

# FIG. 13

EP 4 456 646 A1

# FIG. 14

1000(102/106, 202/206)

# FIG. 15

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 16

140a

Power supply unit

108

110

Communication
unit

120

Control unit

130

Memory unit

140c

I/O unit

Display

Interface unit

140d

140b

100

# FIG. 17

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

208

EP 4 456 646 A1

## INTERNATIONAL SEARCH REPORT

| International application No. |
| --- |
| **PCT/KR2022/020983** |

| A. | CLASSIFICATION OF SUBJECT MATTER |
| --- | --- |

**H04W 72/20**(2023.01)i; **H04W 72/02**(2009.01)i; **H04W 28/26**(2009.01)i; **H04W 76/28**(2018.01)i; **H04W 4/40**(2018.01)i

According to International Patent Classification (IPC) or to both national classification and IPC

| B. | FIELDS SEARCHED |
| --- | --- |

Minimum documentation searched (classification system followed by classification symbols)

H04W 72/20(2023.01); H04W 24/10(2009.01); H04W 52/02(2009.01); H04W 76/18(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SL DRX active time, MAC PDU, 주기(periodicity), 자원 예약 주기(resource reservation periodicity), 활성 시간 외(inactive time), 타이머(timer), 재선택(reselection), SCI, PSCCH, PSSCH, random selection

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | FUJITSU. Reservation Chain-based DRX Power Saving. R2-2100421, 3GPP TSG RAN WG2 Meeting #113-e, e-Meeting. 15 January 2021.<br>See sections 1-2.2. | 1-4,8-12,14-17,19 |
| Y | | 5-7,13,18,20 |
| Y | FUJITSU. Considerations on partial sensing and DRX in NR Sidelink. R1-2109036, 3GPP TSG RAN WG1 Meeting #106bis-e, e-Meeting. 01 October 2021.<br>See section 3.2. | 5-7,18,20 |
| Y | WO 2021-163527 A1 (IDAC HOLDINGS, INC.) 19 August 2021 (2021-08-19)<br>See paragraph [0333]. | 13 |
| A | VIVO. SL DRX Configuration Impact on RAN1 and RAN2. R2-2105351, 3GPP TSG-RAN WG2 Meeting #114-e, E-Meeting. 11 May 2021.<br>See sections 2-2.2. | 1-20 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 March 2023** | **24 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/020983**

**C.      DOCUMENTS CONSIDERED TO BE RELEVANT**

| Category* | Citation of document, with indication, where appropriate, of the relevant passages | Relevant to claim No. |
|---|---|---|
| A | US 2020-0008258 A1 (ASUSTEK COMPUTER INC.) 02 January 2020 (2020-01-02)<br>See paragraphs [0024]-[0293]. | 1-20 |

Form PCT/ISA/210 (second sheet) (July 2022)

**INTERNATIONAL SEARCH REPORT**
Information on patent family members

International application No.

**PCT/KR2022/020983**

| Patent document cited in search report | | | Publication date (day/month/year) | Patent family member(s) | | | Publication date (day/month/year) |
|---|---|---|---|---|---|---|---|
| WO | 2021-163527 | A1 | 19 August 2021 | EP | 4104531 | A1 | 21 December 2022 |
| | | | | IL | 295523 | A | 01 October 2022 |
| | | | | KR | 10-2022-0152219 | A | 15 November 2022 |
| | | | | TW | 202139771 | A | 16 October 2021 |
| US | 2020-0008258 | A1 | 02 January 2020 | CN | 110662262 | A | 07 January 2020 |
| | | | | EP | 3589053 | A2 | 01 January 2020 |
| | | | | EP | 3589053 | A3 | 11 March 2020 |
| | | | | US | 10893563 | B2 | 12 January 2021 |

Form PCT/ISA/210 (patent family annex) (July 2022)